# EUROPÄISCHE PATENTSCHRIFT

(11) **EP 0 753 127 B1**
(45) Veröffentlichungstag und Bekanntmachung des Hinweises auf die Patenterteilung: **17.02.1999**
(21) Anmeldenummer: 95913145.9
(22) Anmeldetag: 20.03.1995
(51) Int. Cl.: F26B 25/00, B01D 53/00, B01D 53/26, B01D 53/22, C02F 1/44

(54) **VERFAHREN ZUM REINIGEN DES ABGASES AUS MIT ERHITZTEM GAS ARBEITENDEN TROCKNUNGSVERFAHREN**
METHOD OF PURIFYING THE EXHAUST GASES FROM A DRYING PROCESS OPERATING WITH HEATED GAS
PROCEDE D'EPURATION DES GAZ RESIDUAIRES RESULTANT D'UN PROCESSUS DE CHAUFFAGE REALISE AVEC UN GAZ CHAUFFE

(30) Priorität: 28.03.1994 DE 4410694
(43) Veröffentlichungstag der Anmeldung: 15.01.1997
(73) Patentinhaber: Henkel Kommanditgesellschaft auf Aktien, 40191 Düsseldorf (DE)
(72) Erfinder: YÜKSEL, Levent, D-40597 Düsseldorf (DE); JOHANNISBAUER, Wilhelm, D-40699 Erkrath (DE); ERBS, Katrin, D-40724 Hilden (DE); FLEISCHMANN, Heike, D-40721 Hilden (DE)
(86) Internationale Anmeldenummer: EP9501028
(87) Internationale Veröffentlichungsnummer: WO9526487

(56) Entgegenhaltungen:
- EP-A- 0 121 357
- EP-A- 0 324 566
- EP-A- 0 361 201
- EP-A- 0 541 009
- DE-A- 4 116 576
- DE-A- 4 125 471
- DE-A- 4 326 468
- DATABASE WPI Section Ch, Week 8219 Derwent Publications Ltd., London, GB; Class D15, AN 82-38250E & JP,A,57 056 083 (TOA GOSEI CHEM IND LTD) , 3.April 1982
- H. Strathmann, "Membranes and Membrane Separation Processes", Ullmann's Encyklopedia of Industrial Chemistry, 5. Auflage, Vol. 16, Seiten 252,253
- R. Rautenbach, R. Albrecht, "Membrantrennverfahren", Sauerländer Verlag, 1981, Seiten 163-169

## Beschreibung

Die Erfindung bezieht sich auf ein Verfahren zum Reinigen des Abgases aus mit erhitztem Gas arbeitenden Trocknungsverfahren für Produkte, die flüchtige Inhaltsstoffe enthalten. Dabei handelt es sich um ein Verfahren zum Reinigen des bei der Sprühtrocknung von tensidhaltigen Stoffen wie Waschmittel-Slurries anfallenden Abgases.

Die Erfindung bezieht sich insbesondere auf die großtechnische Herstellung von Tensiden und Waschmitteln durch Trocknen eines Slurrys in Sprühtürmen, sie ist aber nicht darauf beschränkt. Der Slurry wird durch Düsen in die Trocknungszone versprüht und mit dem im Gegen- oder Gleichstrom geführten heißen Gasstrom getrocknet. Als Trocknungsgas wird in der Regel angesaugte Umgebungsluft eingesetzt, die mit dem Abgas eines Brenners vermischt und auf diese Weise aufgeheizt wird. Das Trocknungsgas enthält daher die Wasserbeladung der Umgebungsluft sowie das bei der Verbrennung entstehende Wasser.

Die Erfindung ist aber nicht auf eine bestimmte Art des Trocknungsgases beschränkt. Es kann aus Luft oder anderen Gasen, z. B. überhitztem Wasserdampf bestehen.

Die Trocknung von flüchtige Inhaltsstoffe enthaltenden Produkten entzieht dem Trocknungsgut nicht nur Wasser, sondern auch je nach Trocknungstemperatur größere oder geringere Anteile der flüchtigen Komponenten. Bei der Herstellung von Waschmitteln durch Trocknung einer wasserhaltigen Paste, des Slurrys, handelt es sich bei den flüchtigen Bestandteilen hauptsächlich um organische Stoffe, z. B. Niotensidanteile in Form von niedrig ethoxylierten Fettalkoholen und unsulfierten Fettalkoholanteilen in Fettalkoholsulfaten. Sie liegen gasförmig oder in Form von feinsten Kondensationsaerosolen im Abgas der zur Trocknung eingesetzten Anlagen, z. B. von Sprühtrocknern, vor. Die Aerosole haben häufig Konzentrationen der Größenordnung von etwa 100 ppm im Abgas. Sie können aufgrund ihrer äußerst kleinen Partikelgröße nicht durch die üblicherweise zur Reinigung von Abgasen aus Trocknungsanlagen eingesetzten Textilfilter oder Zyklone in zufriedenstellendem Umfang abgeschieden werden und gelangen daher mit dem Abgasstrom nach außen. Eine Abscheidung der Aerosole an Textilfiltern, auch schon in geringem Umfang, wirkt sich sogar nachteilig aus, da die Filter verkleben und schon nach relativ kurzer Zeit ausgewechselt werden müssen. Die durch die Aerosole hervorgerufene Abluftemission, die vor allem durch die Wasserdampfflüchtigkeit bestimmter Anteile im Slurry hervorgerufen wird, bezeichnet man als "Pluming".

Zur Reduzierung des unerwünschten Pluming sind zahlreiche Lösungsvorschläge im Stand der Technik bekannt. Es kann die Temperatur des Trocknungsgases reduziert, der Endwassergehalt des getrockneten Produkts möglichst hoch gehalten und außerdem in Gleichstromfahrweise gearbeitet werden. Diese Verfahrensvarianten reduzieren jedoch die Leistung der Trocknungsanlage, verringern die Produktqualität und schränken die Möglichkeiten der Verfahrensführung ein. Eine andere bekannte Möglichkeit zur Verringerung des Pluming liegt in der Abänderung der Zusammensetzung des Slurry. Nachteilig ist dabei die Notwendigkeit, von der optimalen Rezeptur abzuweichen.

Vorgeschlagen wurde ferner eine Kondensation der gasförmigen organischen Bestandteile in einem Waschkühler. Eine derartige Abluftwäsche ist aber aufgrund des hohen Durchsatzes an Trocknungsluft, der in der Größenordnung von über 100.000 m³/h liegt, unwirtschaftlich. Hier wird außerdem das Umweltproblem lediglich von der Abluft auf das Abwasser verlagert.

Der Einsatz eines Gegenstrom-Ionisationswäschers zur Abluftreinigung ist beim hohen Feuchtigkeitsanteil in den meisten Fällen nicht möglich.

Eine weitere bekannte Möglichkeit zur Aerosolbeseitigung bietet die Nachverbrennung der Abluft. Sie erfordert allerdings einen zusätzlichen Energieaufwand, der über dem für die eigentliche Trocknung liegen kann.

Zusammenfassend ist festzustellen, daß die bekannten Möglichkeiten zum Verringern oder Beseitigen des Pluming aufwendig und mit hohen Kosten verbunden sind.

Der Erfindung liegt daher die Aufgabe zugrunde, ein sowohl effektives als auch wirtschaftliches Verfahren der eingangs genannten Art zum Beseitigen der im bei der Sprühtrocknung von tensidhaltigen Stoffen wie Waschmittel-Slurries anfallenden Abgas enthaltenen insbesondere organischen Aerosole zu entwickeln.

Diese Aufgabe wird erfindungsgemäß dadurch gelöst, daß man das Abgas kühlt, das bei der Abkühlung erhaltene Kondensat einer Querstrom-Membranfiltration unterwirft, einen Teil des gereinigten Abgases in das Trocknungsverfahren zurückführt und das erhaltene Konzentrat einer stofflichen, thermischen oder anderen Verwertung zuführt.

Das Abgas wird erfindungsgemäß noch innerhalb der Trocknungsanlage gekühlt. Eine solche Verfahrensführung wird in bekannten Prozessen bewußt vermieden, um Probleme mit aus dem Abgas abgeschiedenem Kondensat zu vermeiden. Eine Abkühlung ist nur zum Rückgewinnen der Abwärme bekannt. Im erfindungsgemäßen Verfahren führt die Kühlung des Abgases zu einer Teilkondensation und Vergrößerung der Aerosole, die in nachgeschalteten Aerosolabscheidern vom Abgas abgetrennt werden. In den Abscheidern fällt bei organischen, wasserunlöslichen Aerosolen in der Regel eine Öl-in-Wasser-Emulsion an. Sie wird mit dem genannten Membranverfahren weiterbehandelt. Als Reststoff fällt hier eine nur geringe Menge an Konzentrat an.

Das gereinigte Abgas, das nur noch äußerst geringe Mengen an Aerosolen enthält, wird in das Trocknungsverfahren zurückgeführt. Dabei treten befürchtete Probleme mit Kohlendioxid-Anteilen, die z. B. mit basischen Inhaltsstoffen des Trocknungsguts in unerwünschter Weise reagieren können, nicht auf. Ein großer Teil des Kohlendioxids löst sich nämlich in der wäßrigen Phase des Kondensats und wird mit diesem aus dem Abgasstrom entfernt.

In einer vorteilhaften Ausführung des erfindungsgemäßen Verfahrens spritzt man zur Abkühlung des Abgases Wasser fein verteilt ein. Das dabei erfolgte Absättigen mit Wasserdampf wird als "Quenche" bezeichnet. Es ist nicht mit einer Abgaswäsche zu verwechseln, die bei den üblicherweise relativ großen Abgasmengen, die in der Größenordnung von etwa 100.000 m3/h und mehr liegen, unwirtschaftlich wäre.

Die Kühlung des Abgases ist auf unterschiedliche Weise möglich. So kühlt man in einer weiteren Ausgestaltung der Erfindung das Abgas mittels Oberflächenkondensatoren ab. Das anfallende Kondensat, das auch hier in der Regel eine Emulsion ist, wird auf die gleiche Weise wie oben beschrieben nachbehandelt.

Als besonders günstig hat es sich herausgestellt, wenn man das Abgas um mindestens 40 °C abkühlt.

Wenn man das Abgas mittels Textilfiltern reinigt, wie es im Stand der Technik üblich ist, so kann einem Verkleben der Filter vorgebeugt werden, wenn man das Abgas erst nach dem Durchgang durch die Textilfilter abkühlt, da die vor der Abkühlung noch sehr kleinen Aerosole den Filter problemlos passieren.

Das Abgas enthält nach der Abkühlung und der Abtrennung des Kondensats einen nur geringen Anteil an Aerosolen. Zur besonders effektiven Verringerung des Aerosolanteils im Abgas wird in einer vorteilhaften Ausgestaltung der Erfindung ein Teil des gereinigten Abgases mit Frischluft versetzt und dem Brenner der Trocknungsanlage zugeführt. In diesem Fall verbrennen die im gereinigten Abgas noch enthaltenen geringen Reste an organischen Aerosolbestandteilen im wesentlichen vollständig. Ein hoher Anteil des zurückgeführten Abgases an der Brennluft führt zu einem besonders guten Reinigungsergebnis. Der Anteil kann bis zu etwa 90 % der Brennluft betragen.

Die Rückführung des ungereinigten Abgases in die Trocknungszone ist an sich als "Umlufttrocknungsverfahren" bekannt. In der vorliegenden Erfindung wird das Abgas jedoch erst nach der Abtrennung von Aerosolbestandteilen zurückgeführt.

Das im erfindungsgemäßen Verfahren anfallende Kondensat wird mittels Querstrom-Membranfiltration aufgearbeitet. Im allgemeinen eignen sich je nach Zusammensetzung der Emulsion organische oder anorganische Mikro- oder Ultrafiltrationsmembranen. Besonders vorteilhaft ist insbesondere aus wirtschaftlicher Sicht der Einsatz einer Mikrofiltrations-Membran.

Das erhaltene Permeat, das auch Filtrat genannt wird, weist derart geringe Abwasserwerte auf, das es im allgemeinen ohne Probleme in den Kanal abgeleitet werden kann. Sollte aber eine noch höhere Reinigung des Permeats erforderlich sein, so wird vorgeschlagen, daß man das aus der Querstrom-Membranfiltration gewonnene Permeat mittels Nanofiltration oder Umkehrosmose reinigt. Alternativ oder zusätzlich kann man das Permeat mit einem Oxidationsmittel, z. B. Peroxid, UV-Licht oder Ozonisierung nachbehandeln. Eine weitere Möglichkeit liegt in der biologischen Reinigung des Permeats. Die biologische Reinigungsstufe kann eine zentrale Kläranlage oder ein dezentraler Bioreaktor sein.

Das Konzentrat (Retentat) aus der Querstrom-Membranfiltration wird vorzugsweise einer stofflichen Verwertung zugeführt. Sollte das nicht möglich sein, wird es entsorgt, z. B. durch Verbrennen.

Das erfindungsgemäße Verfahren kann einerseits bei geschlossenen Trocknungsanlagen, die z. B. mit überhitztem Wasserdampf oder mit Umluft arbeiten, eingesetzt werden. Hier verbleibt nach der Kondensationsstufe eine nur relativ geringe, nicht kondensierbare Menge an Abluft, die diesem Fall vollständig oder nahezu vollständig zurückgeführt wird. Die Abluftemission spielt hier zwar nur eine geringe Rolle, aber die Aerosolbestandteile des im Kreislauf geführten Trocknungsgases müssen laufend entfernt werden, damit sie sich nicht anreichern. Die Erfindung bietet hier eine besonders wirtschaftliche Möglichkeit. Daher wird die Anwendung des Verfahrens auf von Trocknungsanlagen mit im Kreislauf geführten Trocknungsgas abgegebenes Abgas vorgeschlagen.

Die Vorteile der Erfindung werden besonders deutlich bei der Anwendung des Verfahrens auf Abgas, das von offenen Trocknungsanlagen abgegeben wird. Hier treten im Stand der Technik besonders große Probleme mit der Abluftemission auf, die erfindungsgemäß wirtschaftlich und effektiv gelöst werden.

In einem Versuch wurde eine keramische Membran mit einer Porenweite von 0,14 Mikrometern (Handelsname "Carbosep M14" der Fa. Rhone Poulenc) eingesetzt. Die Membranstufe wurde batchweise betrieben, d. h. das Konzentrat wurde wieder in den Einsatzvorlagebehälter zurückgeführt. Aus etwa 900 kg Emulsion mit einem TOC-Wert von etwa 1 g/l erhielt man nach 6 Stunden Versuchsdauer etwa 25 kg Konzentrat mit einem TOC-Wert von etwa 20 g/l. Trotz dieser starken Aufkonzentrierung lag der TOC-Wert des Permeats bei weniger als 0,32 g/l.

Damit ist gezeigt, daß das bei der erfindungsgemäßen Abluftreinigung anfallende Abwasser einfach und kostengünstig aufbereitet werden kann und ein in den Abwasserkanal einleitbares Permeat erhalten wird. Auf diese Weise wird außerdem vermieden, daß mit der Lösung des Abluftproblems ein Abwasserproblem entsteht.

## Patentansprüche

1. Verfahren zum Reinigen des Abgases aus mit erhitztem Gas arbeitenden Trocknungsverfahren für Produkte, die flüchtige Inhaltsstoffe enthalten, wobei dieses Abgas bei der Sprühtrocknung von tensidhaltigen Stoffen wie Waschmittel-Slurries anfällt, dadurch gekennzeichnet, daß man das Abgas kühlt, das bei der Abkühlung erhaltene Kondensat einer Querstrom-Membranfiltration unterwirft, einen Teil des gereinigten Abgases in das Trocknungsverfahren zurückführt und das erhaltene Konzentrat einer stofflichen, thermischen oder anderen Verwertung zuführt.

2. Verfahren nach Anspruch 1, dadurch gekennzeichnet, daß man zur Abkühlung des Abgases Wasser fein verteilt einspritzt.

3. Verfahren nach Anspruch 1, dadurch gekennzeichnet, daß man das Abgas mittels Oberflächenkondensatoren abkühlt.

4. Verfahren nach einem der Ansprüche 1 bis 3, dadurch gekennzeichnet, daß man das Abgas um mindestens 40 °C abkühlt.

5. Verfahren nach einem der Ansprüche 1 bis 4, wobei man das Abgas mittels Textilfiltern reinigt, dadurch gekennzeichnet, daß man das Abgas erst nach dem Durchgang durch die Textilfilter abkühlt.

6. Verfahren nach einem der Ansprüche 1 bis 5, dadurch gekennzeichnet, daß man einen Teil des gereinigten Abgases mit Frischluft versetzt und dem Brenner der Trocknungsanlage zuführt.

7. Verfahren nach einem der Ansprüche 1 bis 6, dadurch gekennzeichnet, daß man eine Mikrofiltrations-Membran einsetzt.

8. Verfahren nach einem der Ansprüche 1 bis 7, dadurch gekennzeichnet, daß man das aus der Querstrom-Membranfiltration gewonnene Permeat mittels Nanofiltration oder Umkehrosmose reinigt.

9. Verfahren nach einem der Ansprüche 1 bis 8, dadurch gekennzeichnet, daß man das aus der Querstrom-Membranfiltration gewonnene Permeat mit einem Oxidationsmittel nachbehandelt.

10. Verfahren nach einem der Ansprüche 1 bis 9, dadurch gekennzeichnet, daß man das aus der Querstrom-Membranfiltration gewonnene Permeat biologisch reinigt.

11. Anwendung des Verfahrens nach einem der Ansprüche 1 bis 10 auf von Trocknungsanlagen mit im Kreislauf geführten Trocknungsgas abgegebenes Abgas.

12. Anwendung des Verfahrens nach einem der Ansprüche 1 bis 10 auf von offenen Trocknungsanlagen abgegebenes Abgas.

## Claims

1. A process for cleaning the waste gas from drying processes using heated gas for products containing volatile ingredients, more particularly for cleaning the waste gas accumulating in the spray drying of surfactant-containing materials, such as detergent slurries, characterized in that the waste gas is cooled, the condensate obtained is subjected to crossflow membrane filtration, part of the cleaned waste gas is returned to the drying process and the concentrate (6) obtained is put to a material, thermal or other use.

2. A process as claimed in claim 1, characterized in that water is finely sprayed in to cool the waste gas.

3. A process as claimed in claim 1, characterized in that the waste gas is cooled by surface condensers (3).

4. A process as claimed in any of claims 1 to 3, characterized in that the waste gas is cooled by at least 40°C.

5. A process as claimed in any of claims 1 to 4, the waste gas being cleaned by passage through textile filters, characterized in that the waste gas is cooled only after it has passed through the textile filters.

6. A process as claimed in any of claims 1 to 5, characterized in that fresh air (8) is added to part of the cleaned waste gas and the mixture is delivered to the burner (9) of the drying installation.

7. A process as claimed in any of claims 1 to 6, characterized in that a microfiltration membrane is used.

8. A process as claimed in any of claims 1 to 7, characterized in that the permeate (7) obtained from the crossflow membrane filtration is purified by nanofiltration or reverse osmosis.

9. A process as claimed in any of claims 1 to 8, characterized in that the permeate (7) obtained from the crossflow membrane filtration is aftertreated with an oxidizing agent.

10. A process as claimed in any of claims 1 to 9, characterized in that the permeate (7) obtained from the crossflow membrane filtration is biologically purified.

11. The application of the process claimed in any of claims 1 to 10 to waste gas from drying installations using circulated drying gas.

12. The application of the process claimed in any of claims 1 to 10 to waste gas from open drying installations.

## Revendications

1. Procédé d'épuration des gaz résiduaires provenant d'un procédé de séchage qui opère avec du gaz chauffé, pour des produits qui renferment des constituants volatils dans lequel ces gaz résiduaires lors du séchage par pulvérisation de substances contenant des agents tensioactifs comme des suspensions de produits de lavage, se produisent,
caractérisé en ce qu'
• on refroidit les gaz résiduaires,
• on soumet le condensat obtenu au cours du refroidissement à une filtration sur membrane en courant transversal,
• on ramène une partie des gaz résiduaires épurés dans le processus de séchage et en ce qu'on amène le concentrat obtenu à une utilisation matérielle, thermique ou autre.

2. Procédé selon la revendication 1,
caractérisé en ce qu'
on injecte en vue du refroidissement des gaz résiduaires, de l'eau finement divisée.

3. Procédé selon la revendication 1,
caractérisé en ce qu'
on refroidit les gaz résiduaires à l'aide de condenseurs à surface.

4. Procédé selon l'une des revendications 1 à 3,
caractérisé en ce qu'
on refroidit les gaz résiduaires d'au moins 40°C.

5. Procédé selon l'une des revendications 1 à 4, dans lequel on épure les gaz résiduaires à l'aide de filtres en textile,
caractérisé en ce qu'
on refroidit les gaz résiduaires seulement après le passage à travers le filtre en textile.

6. Procédé selon l'une des revendications 1 à 5,
caractérisé en ce qu'
on mélange une partie des gaz résiduaires épurés à de l'air frais et qu'on l'amène au brûleur de l'installation de séchage.

7. Procédé selon l'une des revendications 1 à 6,
caractérisé en ce qu'
on met en oeuvre une membrane de microfiltration.

8. Procédé selon l'une des revendications 1 à 7,
caractérisé en ce qu'
on purifie le perméat, produit à partir de la filtration sur membrane en courant transversal, à l'aide d'une nanofiltration ou d'une osmose inverse.

9. Procédé selon l'une des revendications 1 à 8,
caractérisé en ce qu'
on traite ultérieurement le perméat, produit à partir de la filtration sur membrane en courant transversal, avec un agent d'oxydation.

10. Procédé selon l'une des revendications 1 à 9,
caractérisé en ce qu'
on purifie biologiquement le perméat, produit à partir de la filtration sur membrane en courant transversal.

11. Utilisation du procédé selon l'une des revendications 1 à 10, à des gaz résiduaires émis par des installations de séchage avec des gaz de séchage menés dans le circuit.

12. Utilisation du procédé selon l'une des revendications 1 à 10,à des gaz résiduaires émis par des installations de séchage ouverte.
